(19) **Europäisches Patentamt**
**European Patent Office**
**Office européen des brevets**

(11) **EP 4 563 811 A1**

(12) **EUROPEAN PATENT APPLICATION**

(43) Date of publication:
04.06.2025 Bulletin 2025/23

(21) Application number: 23213533.5

(22) Date of filing: 30.11.2023

(51) International Patent Classification (IPC):
F03D 7/02 $^{(2006.01)}$    F03D 13/10 $^{(2016.01)}$

(52) Cooperative Patent Classification (CPC):
F03D 13/104; F03D 7/0272; F05B 2240/40;
F05B 2260/87

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(71) Applicant: ABB SCHWEIZ AG
5400 Baden (CH)

(72) Inventors:
• TSOUMAS, Ioannis
8032 Zürich (CH)
• ULMER, Daniel
4410 Liestal (CH)

• PANDIARAJAN, Prem
5400 Baden (CH)
• GERARDI, Denise
5300 Turgi (CH)
• KALYGIN, Andrey
5303 Wuerenlingen (CH)
• STULZ, Christian
8008 Zürich (CH)
• FISCHER, Jerome
4623 Neuendorf (CH)
• BEZZECCHERI, Edoardo
5415 Nussbaumen (CH)

(74) Representative: Sykora & König Patentanwälte
PartG mbB
Maximilianstraße 2
80539 München (DE)

(54) **METHOD FOR BRINGING A ROTOR HUB OF A WIND TURBINE IN A PREDETERMINED POSITION FOR ARRANGING A BLADE OF THE WIND TURBINE AT THE ROTOR HUB.**

(57)    A method for bringing a rotor hub (51) of a wind turbine (20) in a predetermined position for arranging a blade (50) of the wind turbine (20) at the rotor hub (51) is provided. The wind turbine (20) comprises the rotor hub (51), a rotating electrical machine (22) mechanically coupled to the rotor hub (51), a machine-side converter (24, 44) electrically coupled to the rotating electrical machine (22), a DC-link (26, 46) electrically coupled to the machine-side converter (24), and a grid-side converter (28, 48) electrically coupled to the DC-link (26, 46) and to an electrical grid. The method comprises operating the rotating electrical machine (22) in a blade assembly mode in which the rotating electrical machine (22) is configured for rotating the rotor hub (51) such that the rotor hub (51) is brought in the predetermined position by the rotating electrical machine (22), wherein the predetermined position of the rotor hub (51) is given by a predetermined rotor mechanical angle reference ($\theta_R^{ref}$) of the rotor hub (51).

**Fig. 6**

EP 4 563 811 A1

**Description**

FIELD OF THE INVENTION

The invention relates to the field of wind turbines. In particular, the invention relates to a blade assembly during which a blade of the wind turbine is arranged at a rotor hub of the wind turbine. In particular, the invention relates to a method for bringing a rotor hub of a wind turbine in a predetermined position for arranging a blade of the wind turbine at the rotor hub, to a master controller for an energy conversion system of the wind turbine, to the energy conversion system, to a computer program for driving the energy conversion system, and to a computer-readable medium for storing the computer program.

BACKGROUND OF THE INVENTION

Conventional wind turbines, e.g. gearless wind turbines, comprise three or more blades mechanically coupled to a rotatable rotor hub of the wind turbine. The rotor hub is mechanically coupled to an energy conversion system of the wind turbine. The energy conversion system comprises amongst others a rotating electrical machine. In a generator mode, the rotating electrical machine is configured for being rotated by the blades via the rotor hub and for generating electric energy upon being rotated. In this context, the rotating electrical machine may be referred to as generator. The electric energy may be supplied to an electrical grid to which the energy conversion system is electrically coupled. The rotating electrical machine may be coupled to the electrical grid by one or more converters, e.g. one or more 3-Level Neutral Point Clamped (3LNPC) converters, of the energy conversion system in order to convert the energy generated by the rotating electrical machine such that it is appropriate for being supplied to the grid.

When the wind turbine is installed at its predetermined location in the field, a tower of the wind turbine is arranged at the predetermined location first. Then, the blades are installed at the rotor hub. For example, the blades may be arranged at the rotor hub on the ground. Then, the rotor hub with the blades may be lifted up to an installation interface for the rotor hub near a top of the tower. However, this solution needs a lot of space, in particular on the ground. Additionally, as the blades are becoming bigger and bigger with proceeding technical development, it may be hard or even impossible to lift the weight of three or more blades at a height of 100 meters or more with cranes currently available on the market.

Alternatively, the rotor hub may be installed at the tower before installing the tower at the predetermined location and the blades may be lifted up and coupled to the rotor hub, usually horizontally, one after the other ("single blade installation") afterwards. Normally, a specific "blade lifting tool" is needed for this approach. Such tools may be provided by a manufacturer of the wind turbine and may be designed to fit a specific blade model only. In addition, for this single blade installation, as each of the blades is usually installed horizontally, the rotor hub has to be rotated after one of the blades is installed to have an empty socket in the right position for the next blade. This procedure has to be repeated until all blades are installed. A second tool may be needed to turn the rotor hub to a predetermined position in which the next one of the blades shall be installed. This second tool may be referred to as "rotor turning tool" or "turning gear". Those turning tools are usually of a hydro-mechanical typ. A power source may be connected to a pump generating a hydro-pressure needed to rotate the gears of the wind turbine with the help of such a hydro-mechanical turning tool. These turning tool may add complexity and costs to the blade installation process.

DESCRIPTION OF THE INVENTION

It is an object of the present invention to provide a method for bringing a rotor hub of a wind turbine in a predetermined position for arranging a blade of the wind turbine at the rotor hub, and to provide a corresponding computer program for driving the wind turbine, both of which enabling a simple and low-cost blade assembly. It is another object of the present invention to provide a master controller for an energy conversion system of the wind turbine, which is able to carry out the method, to provide the energy conversion system comprising the master controller, and to provide a computer-readable medium storing the computer program.

These objects are achieved by the subject-matter of the independent claims. Further exemplary embodiments are evident from the dependent claims and the following description.

An object is achieved by a method for bringing a rotor hub of a wind turbine in a predetermined position for arranging a blade of the wind turbine at the rotor hub. The wind turbine comprises the rotor hub, a rotating electrical machine mechanically coupled to the rotor hub, a machine-side converter electrically coupled to the rotating electrical machine, a DC-link electrically coupled to the machine-side converter, and a grid-side converter electrically coupled to the DC-link and to an electrical grid. The method comprises operating the rotating electrical machine in a blade assembly mode in which the rotating electrical machine is configured for rotating the rotor hub such that the rotor hub is brought in the predetermined position by the rotating electrical machine, wherein the predetermined position of the rotor hub is given by a predetermined rotor mechanical angle reference of the rotor hub.

The wind turbine may be a gearless wind turbine. The wind turbine comprises an energy conversion system, wherein the rotating electrical machine, the rotor hub, the machine-side converter, the DC-link, and the grid-side converter are components of the energy conversion system. The rotating electrical machine may be operated as a generator, e.g. a synchronous generator, or as a motor. The mode in which the rotating electrical machine is operated as the generator may be referred to as generator mode. The mode in which the rotating electrical machine is operated as the motor may be referred to as motor mode. The rotating electrical machine may have one or more independent winding systems.

The rotating electrical machine may be operated in the blade assembly mode by a master controller of the wind turbine. The master controller may be electrically coupled to the rotating electrical machine and may be configured for operating the rotating electrical machine. Further, the master controller may be electrically coupled to the machine-side converter and/or to the grid-side converter. In this case, in the generator mode, the master controller may be configured for modulating the machine-side converter for converting an AC voltage of the rotating electrical machine into a DC voltage supplied to the DC-link and for modulating the grid-side converter to convert a DC-link voltage at the DC-link into an AC output voltage to be supplied to the electrical grid. In contrast, in the blade assembly mode or motor mode, the master controller may be configured for modulating the grid-side converter to convert an AC input voltage supplied from the electrical grid into a DC-link voltage at the DC-link and for modulating the machine-side converter for converting the DC voltage supplied to the DC-link into an AC voltage for operating the rotating electrical machine. The master controller may modulate the machine-side converter and the grid-side converter by one or more control signals generated by the master controller and supplied to semiconductor switches of the machine-side converter and, respectively, the grid-side converter by the master controller.

So, during normal operation, the rotating electrical machine is used as a generator for producing power which is transferred to the electrical grid. In this context, the rotating electrical machine may be simply referred to as "generator". The master controller may include a torque controller, which may be configured for following a torque reference provided by external loops of the master controller during the normal operation. In contrast, in the proposed blade assembly mode of operation, the flow of the power is reversed. In particular, the electrical grid supplies the electrical power which, via the proposed method, is used to operate the generator as a motor and to orientate the rotor hub to the predetermined position for assembling one or more of the blades to the rotor hub. In this context, the electrical grid may be optionally represented by an external generator, e.g. a diesel generator, that provides the required electrical power for the rotating electrical machine during the blade assembly and/or motor mode, for example as long as the "normal" or public electrical grid is not available. In this case, a transformer with a very small rated power may be used to connect the conversion lines to the diesel generator.

The machine-side converter may be an active rectifier. The grid-side converter may be an inverter. The machine-side converter and the grid side converter may form a converter line, referred to in the following simply as converter. The wind turbine may comprise a further converter with a further machine-side converter, a further DC-link and a further grid-side converter. The further converter may be arranged in a further rotating electrical machine winding or in parallel to the converter. At least one of the machine-side converters may be a converter with a neutral point, e.g. a three-level NPC converter, e.g. an active NPC or a T-Type converter. At least one of the grid-side converters may be a neutral point clamped converter, e.g. a 3LNPC converter. In the case of two machine windings and two back-to-back converters the energy conversion system may comprise a wye/delta-wye transformer, which connects the converter(s) to the grid.

Operating the rotating electrical machine as the motor for bringing the rotor hub in the predetermined position for assembling the blade enables to assemble the blade without any external turning tool and without the use of any additional expensive equipment, such as e.g. a pump for generating a hydro-pressure needed to rotate the gears of the wind turbine by a hydro-mechanical turning tool. By means of this proposed approach a reduced complexity of and reduced costs for the corresponding blade assembling process are achieved.

When the wind turbine is installed at its predetermined location in the field, a tower of the wind turbine including the rotor hub is arranged at the predetermined location first. Then, the blades may be lifted up and coupled to the rotor hub, usually horizontally, one after the other ("single blade installation"), e.g. with the help of a specific "blade lifting tool". Such a tool may be provided by a manufacturer of the wind turbine and may be designed to fit a specific blade model. In addition, for this single blade installation, as each of the blades is usually installed horizontally, the rotor hub has to be rotated after one of the blades is installed to have an empty socket in the right position for the next blade, preferably by the method explained above and in the following. This procedure has to be repeated until all blades are installed. So, the above method may be carried out two or more times, e.g. three time, in order to install all blades, e.g. three blades, at the rotor hub.

According to one or more embodiments, the blade assembly mode comprises operating the rotating electrical machine in the motor mode of the rotating electrical machine, wherein, in the motor mode, the rotating electrical machine is configured for rotating the rotor hub by electric energy from the electrical grid supplied to the rotating electrical machine via the grid-side converter, the DC-link, and the machine side converter. In this context, the rotating electrical machine may be simply referred to as "motor". So, the blade assembly mode may comprise or may be identical to the motor mode.

According to one or more embodiments the method comprises: receiving an actual angle signal which is representative for an actual rotor mechanical angle of the rotor hub, wherein the actual rotor mechanical angle is representative for an actual position, in particular an actual angular position, of the rotor hub; and operating the rotating electrical machine in the blade assembly mode depending on the actual rotor mechanical angle of the rotor hub. The actual position of the rotor hub refers to an angular position of the rotor hub. The actual position may be measured by an appropriate sensor, e.g. an angular position encoder, simply referred to as "encoder".

According to one or more embodiments, the rotating electrical machine is operated in the blade assembly mode depending on the actual rotor mechanical angle of the rotor hub by determining an actual position error between the predetermined rotor mechanical angle reference and the actual rotor mechanical angle, determining a rotor mechanical speed reference depending on the actual position error, and operating the rotating electrical machine depending on the rotor mechanical speed reference.

One critical aspect of the blade assembly mode is the calculation of the rotor mechanical speed of the rotor hub and thereby of the already installed blades. A simple straight-forward calculation from a derivative of the actual angular position may be problematic at very low speeds since, depending on a resolution of the encoder, it may take very long until a new value of the actual angular position is sent to the master controller. This results in a big delay in the rotor mechanical speed calculation, which in turn may cause undesired rotor mechanical speed and/or angular position oscillations for the corresponding closed-loop control. The following embodiments may appropriately handle this issue, wherein the corresponding method steps may be carried out by a speed controller of the wind turbine. The speed controller may be implemented within the master controller or may communicate with the master controller.

According to one or more embodiments, the rotating electrical machine may be operated depending on the rotor mechanical speed reference by receiving an actual speed signal which is representative for an actual rotor mechanical speed of the rotor hub, determining an actual speed error between the rotor mechanical speed reference and the actual rotor mechanical speed, and operating the rotating electrical machine depending on the actual speed error.

According to one or more embodiments, the rotating electrical machine is operated in the blade assembly mode depending on the actual rotor mechanical angle of the rotor hub by determining an estimated rotor mechanical angle depending on the actual rotor mechanical angle, determining an estimated position error between the predetermined position and the estimated rotor mechanical angle, determining a rotor mechanical speed reference depending on the estimated position error, and operating the rotating electrical machine depending on the rotor mechanical speed reference. The estimated rotor mechanical angle may be determined depending on the actual rotor mechanical angle by a PLL.

According to one or more embodiments, the rotating electrical machine may be operated depending on the rotor mechanical speed reference by determining an estimated rotor mechanical speed depending on the actual rotor mechanical angle and the estimated rotor mechanical angle, determining an estimated speed error between the rotor mechanical speed reference and the estimated rotor mechanical speed, and operating the rotating electrical machine depending on the estimated speed error. The estimated rotor mechanical speed may be determined depending on the actual rotor mechanical angle and the estimated rotor mechanical angle by a PLL. The PLL may be integrated within the controller of the wind turbine or at least may communicate with the controller of the wind turbine.

Optionally, the estimated rotor mechanical speed may be filtered by a low pass filter. In this case, the estimated speed error may be determined as the difference between the rotor mechanical speed reference and the filtered estimated rotor mechanical speed. The filtered estimated rotor mechanical speed may be sent to a speed controller of the wind turbine. Optionally, to have more degrees of freedom in a fine-tuning of the speed control by the speed controller, different time constants $\tau_p$ and $\tau_i$ may be used for the lowpass filtering of the parts calculated by a corresponding proportional and integral controller respectively, wherein they optionally may be set to the same value. The speed controller may be implemented within the master controller or at least may communicate with the master controller. The proportional and/or the integral controller may be implemented within the master controller or at least may communicate with the master controller.

According to one or more embodiments, the estimated rotor mechanical angle is determined depending on the estimated rotor mechanical speed. For example, the estimated rotor mechanical angle may be determined depending on the estimated rotor mechanical speed by integrating the estimated rotor mechanical angle. This integration may be carried out at a very high sampling rate, e.g. in a range of 0.1 MHz to 10 MHz, e.g. 0.5 MHz to 5 MHz, e.g. about 1 MHz. The PI controller for determining the estimated rotor mechanical speed may be implemented at a much lower sampling rate, e.g. in the range of some kHz, in particular without compromising the dynamic performance of the blade assembly mode.

According to one or more embodiments, the rotating electrical machine is operated depending on the actual speed error or the estimated speed error by determining a temporary torque reference depending on the actual speed error or, respectively, the estimated speed error, and operating the rotating electrical machine depending on the temporary torque reference.

According to one or more embodiments, the rotating electrical machine is operated depending on the temporary torque reference by estimating a blade torque of one or more blades already arranged at the rotor hub, adjusting the temporary torque reference by the blade torque, and operating the rotating electrical machine depending on a correspondingly adjusted torque reference. In this context, for the calculation of the adjusted torque reference, a feedforward term corresponding to the blade torque may be added to an output of the speed controller. The feedforward term may correspond to an estimated blade torque generated by already mounted blades. The estimated blade torque may be a function of the actual angular position of the rotor hub and may depend on the number of the blades which are already mounted at the rotor hub.

The consideration of the torque of the already mounted blades and the corresponding inclusion of the feedforward term allows a very good, e.g. optimal, tuning of the speed controller which may generate a relatively small torque reference only necessary for the acceleration/deceleration, as well as for a compensation of wind gusts. The adjusted torque reference may be sent to a torque controller of the wind turbine. The torque controller may be implemented within or may communicate with the master controller. The torque controller may consist of a linear current controller or of a non-linear flux controller, as they are known in the art.

According to one or more embodiments, the temporary torque reference is adjusted by the blade torque by adding the blade torque to the temporary torque reference, and the adjusted torque reference corresponds to the sum of the blade torque and the temporary torque reference.

According to one or more embodiments, the machine-side converter comprises several semiconductor switches and a short circuit is generated at the DC-link by activating all of the semiconductor switches at the same time. This causes a three-phase short circuit at the machine-side terminals of the machine-side converter and a corresponding generator short circuit torque. This generator short circuit torque may prevent an unintended fall of an already installed one of the blades. This enables to move the corresponding blade smoothly to a vertical blade position, after the blade has been installed in a horizontal blade position. A corresponding short circuit steady state current may be in the range of a rated current, e.g. due to a high generator impedance of approximately 1 pu). Activating all of the semiconductor switches at the same time may be referred to as fall prevention mode. The fall prevention mode may be triggered when the rotor hub 51 is not locked mechanically and if one or more of the converters does not function properly. For example, in case of a fault of one or more of the converters one or more converter protection functions may be activated, as they are known in the art, and at least one of these converter protection functions may trigger the fall prevention mode. Alternatively or additionally, the fall prevention mode may be triggered, when a control of the blades is lost. This lost of control may be determined depending on the actual position of the blade and/or depending on a position signal of the encoder.

Another object is achieved by the master controller for the energy conversion system of the wind turbine. The master controller is adapted/configured for performing the above-described method.

Another object is achieved by the energy conversion system of the wind turbine. The energy conversion system comprises the rotating electrical machine, the at least one machine-side converter coupled to the rotating electrical machine, the at least one DC-link coupled to the machine-side converter; the at least one grid-side converter, which is configured for coupling the DC-link to a grid, and the above-mentioned master controller.

Another object is achieved by a computer program for the above energy conversion system, in particular for the above master controller. The computer program, when being executed by a processor of the master controller, is adapted for performing the above method.

Another object is achieved by a computer-readable medium, in which the above computer program is stored. The computer-readable medium may be a floppy disk, a hard disk, an USB storage device, a RAM, a ROM, an EPROM or a FLASH memory. The computer readable medium may also be a data communication network, e.g. the Internet, which allows downloading a program code. In general, the computer-readable medium may be a non-transitory or transitory medium.

Another object is achieved by a method for avoiding the unintended fall of the blade of the wind turbine when the blade or another blade of the wind turbine is arranged at the rotor hub of the wind turbine. The wind turbine comprises the rotor hub, the rotating electrical machine mechanically coupled to the rotor hub, the machine-side converter electrically coupled to the rotating electrical machine and comprising several semiconductor switches, the DC-link electrically coupled to the machine-side converter, and the grid-side converter electrically coupled to the DC-link and to an electrical grid. This method comprises generating a short circuit at the DC-link by activating all of the semiconductor switches at the same time. This causes a three-phase short circuit at the machine-side terminals of the machine-side converter and a corresponding generator short circuit torque. This generator short circuit torque may prevent the unintended fall of the blade. This enables to move the blade smoothly to a vertical blade position. A corresponding short circuit steady state current may be in the range of a rated current, e.g. due to a high generator impedance of approximately 1 pu). A start of the method may be triggered as described above with respect to the fall prevention mode.

These and other aspects of the invention will be apparent from and elucidated with reference to the embodiments described hereinafter. It has to be understood that in order to provide a clear and concise description and in order not to provide unnecessarily repetitions, some features, embodiments, and/or advantages of the present invention are described in this description with respect to only one aspect of the invention, e.g. only with respect to the method for bringing the rotor hub in the predetermined position, only with respect to the master controller, only with respect to the energy conversion system, only with respect to the computer program, only with respect the computer-readable medium, and/or only with respect to the method for avoiding the unintended fall of the blade. However, these features, embodiments, and/or, respectively, advantages may be simply transferred from one aspect to another of the aspects, without leaving the scope of the present invention, as may be realised by a person skilled in the corresponding art.

BRIEF DESCRIPTION OF THE DRAWINGS

The subject matter of the invention will be explained in more detail in the following text with reference to exemplary embodiments which are illustrated in the attached drawings.

Fig. 1    shows an exemplary embodiment of an energy conversion system of a wind turbine;

Fig. 2    shows an exemplary embodiment of a converter of the energy conversion system of figure 1;

Fig. 3    shows an exemplary embodiment of a first control diagram of the wind turbine;

Fig. 4    shows an exemplary embodiment of a second control diagram of the wind turbine;

Fig. 5    shows an exemplary embodiment of a third control diagram of the wind turbine;

Fig. 6    shows an example of a blade of the wind turbine at a rotor hub of the wind turbine in two different positions;

Fig. 7    shows a flowchart of an exemplary embodiment of a method for avoiding an unintended fall of the blade of the wind turbine of figure 6.

The reference symbols used in the drawings, and their meanings, are listed in summary form in the list of reference symbols. In principle, identical parts are provided with the same reference symbols in the figures.

DETAILED DESCRIPTION OF EXEMPLARY EMBODIMENTS

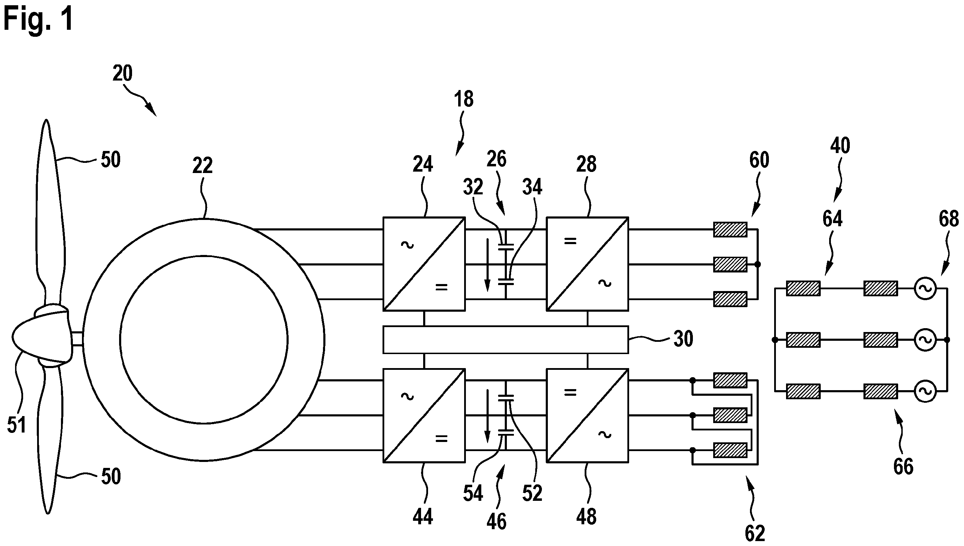

**Fig. 1** shows an exemplary embodiment of an energy conversion system 18 of a wind turbine 20. The wind turbine 20 may be a gearless wind turbine. The wind turbine 20 may comprise one or more, e.g. three blades 50, coupled a rotor hub 51 of the wind turbine 20. The rotor hub 51 is mechanically coupled to the energy conversion system 18.

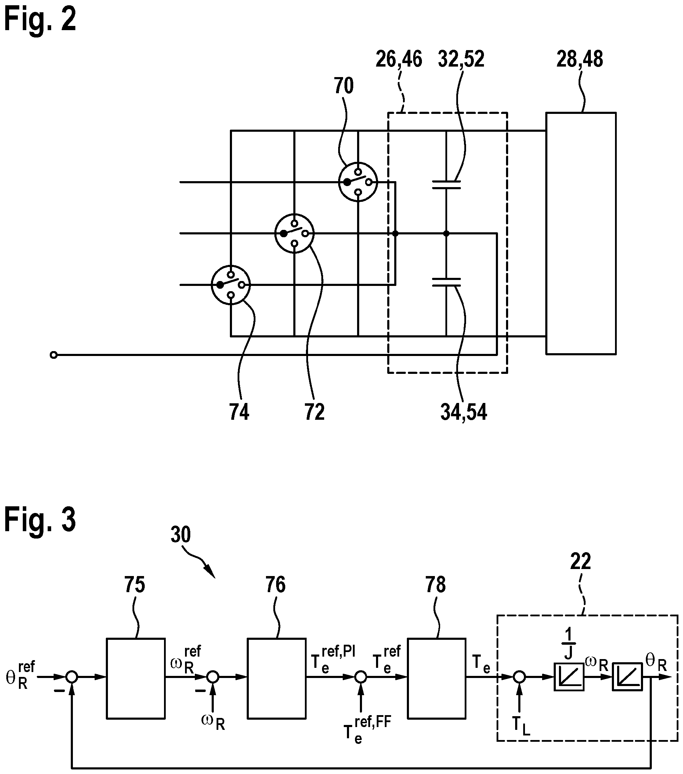

The energy conversion system 18 comprises a rotating electrical machine 22 mechanically coupled to the rotor hub 51, a first machine-side converter 24, a first DC-link 26, a first grid-side converter 28, a master controller 30 (see figure 3) and a transformer 40. The first machine-side converter 24 and the first grid-side converter 28 form a first converter line. The first machine-side converter 24, the first DC-link 26 and the first grid-side converter 28 implement a first converter. The first converter may be a back-to-back converter. The first machine-side converter 24 may be a converter with a neutral point, e.g. a 3LNPC converter. The first DC-link 26 comprises a first capacitor 32 and a second capacitor 34 arranged in series, wherein the node between the first and second capacitor 32, 34 is a neutral point NP of the first converter. The first grid-side converter 28 may be a converter with a neutral point, e.g. a 3LNPC converter.

The energy conversion system 20 further comprises a second converter, e.g. a second converter line, with a second machine-side converter 44, a second DC-link 46 and a second grid-side converter 48. The second converter may be a back-to-back converter. The second machine-side converter 44 may be a converter with a neutral point, e.g. a 3LNPC converter. The second DC-link 46 may comprise a third capacitor 52 and a fourth capacitor 54 arranged in series, wherein a node between the third and fourth capacitor 52, 54 may be a neutral point NP of the second converter. The second grid-side converter 48 may be a converter with a neutral point, e.g. a 3LNPC converter.

The transformer 40 may be a wye/delta-wye transformer, which connects the first converter to an electrical grid. The transformer 40 may comprise first transformer secondary winding inductances 60 connected to the first converter, second transformer secondary winding inductances 62 connected to the second converter, transformer primary winding inductances 64 each being coupled to a grid inductance 66 and a grid source 68.

The rotating electrical machine 22 may be operated in a generator mode and as such as an electrical generator, e.g. a synchronous generator, or in a motor mode and as such as an electric motor. In the generator mode, which may be referred to as "normal" mode, the blades 50 and thereby the rotor hub 51 can be rotated by wind in the surroundings of the wind turbine 20 and the corresponding kinetic energy may be converted into electric energy by the energy conversion system 18. In contrast, in the motor mode, which may be referred to as "blade assembly mode" in this description, electric energy supplied to the wind turbine 20 from an electric grid may be converted into kinetic energy by the energy conversion system 18 such that the rotor hub 51 can be rotated by the electric energy thereby generating the kinetic energy.

The first machine-side converter 24 may be used as an active rectifier, if the rotating electrical machine 22 is in the generator mode, or as an inverter, if the rotating electrical machine 22 is in the motor mode. The first grid-side converter 28 may be used as an inverter, if the rotating electrical machine 22 is in the generator mode, or as a rectifier, e.g. an active rectifier, if the rotating electrical machine 22 is in the motor mode. The second machine-side converter 44 may be used as a rectifier, e.g. an active rectifier, if the rotating electrical machine 22 is the generator mode, or as an inverter, if the rotating electrical machine 22 is in the motor mode. The second grid-side converter 48 may be used as an inverter, if the rotating electrical machine 22 is in the generator mode, or as a rectifier, e.g. an active rectifier, if the rotating electrical machine 22 is in the motor mode.

The rotating electrical machine 22 may have two or more independent winding systems. In the generator mode, the rotating electrical machine 22, e.g. a first winding system of the rotating electrical machine 22, may generate a three-phase input current with partial currents. The partial currents may be supplied to the machine-side converter 24. The machine-side converter 24 may convert the AC voltage of the rotating electrical machine 22 into a DC voltage supplied to the DC-link 26 and to the grid-side converter 28. The grid-side converter 28 may convert the DC voltage into an AC output voltage providing a three-phase output current with partial currents.

The second converter may be arranged in a second winding of the rotating electrical machine 22. In the generator mode, the rotating electrical machine 22, e.g. the second winding system of the rotating electrical machine 22, also generates a three-phase input current with corresponding partial currents. These partial currents may be supplied to the second machine-side converter 44. The second machine-side converter 44 may convert the AC voltage of the rotating electrical machine 22 into a second DC voltage supplied to the second DC-link 46 and to the second grid-side converter 48. The second grid-side converter 48 may convert the second DC voltage into an AC output voltage providing a three-phase output current with partial currents.

The master controller 30 is configured for controlling the energy conversion system 20. The master controller 30 may comprise a processor and a computer-readable medium. The computer-readable medium may store a computer program for controlling the energy conversion system 18. Alternatively or additionally, the master controller 30 may comprise a circuitry, e.g. an FPGA or ASIC, which is configured for controlling the energy conversion system 18. The computer-readable medium may be a memory unit of the energy conversion system, e.g. a floppy disk, a hard disk, an USB (Universal Serial Bus) storage device, a RAM (Random Access Memory), a ROM (Read Only Memory), an EPROM (Erasable Programmable Read Only Memory) or a FLASH memory. The computer readable medium may also be a data communication network, e.g. the Internet, which allows downloading a program code. In general, the computer-readable medium may be a non-transitory or transitory medium.

In particular, in the generator mode, the controller 30 may be configured for modulating the first machine-side converter 24 and optionally the first grid-side converter 28. The master controller 30 may modulate the first machine-side converter 24 for converting the AC voltage of the rotating electrical machine 22 into the DC voltage supplied to the first DC-link 26. The master controller 30 may modulate the first grid-side converter 28 to convert the first DC-link voltage at the first DC-link 26 into the AC output voltage to be supplied to the transformer 40 and further to the electrical grid.

Further, in the generator mode, the controller 30 may be configured for modulating the second machine-side converter 44 and optionally the second grid-side converter 48. The master controller 30 may modulate the second machine-side converter 44 for converting the AC voltage of the rotating electrical machine 22 into the second DC voltage supplied to the second DC-link 46. The master controller 30 may modulate the second grid-side converter 48 to convert the second DC-link voltage at the second DC-link 46 into the AC output voltage to be supplied to the transformer 40 and further to the electrical grid.

So, during normal operation, the rotating electrical machine is used as a generator for producing power which is transferred to the electrical grid. In this context, the rotating electrical machine may be simply referred to as "generator". The master controller may include a torque controller, which may be configured for following a torque reference provided by external loops of the master controller during the normal operation.

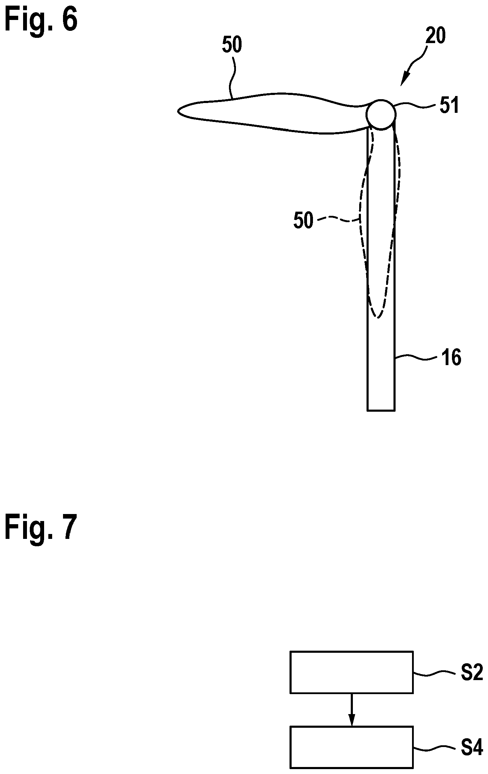

However, when the wind turbine 20 is installed at its predetermined location in the field, a tower 16 (see figure 6) of the wind turbine 20 including the rotor hub 51 may be arranged at the predetermined location first. Then, the blades 50 may be lifted up and coupled to the rotor hub 51, usually horizontally orientated, one after the other ("single blade installation"), e.g. with the help of a specific "blade lifting tool". In addition, for this single blade installation, as each of the blades 50 is usually installed horizontally, the rotor hub 51 has to be rotated after one of the blades 50 is installed to have an empty socket of the rotor hub 51 in the right position for the next blade 50. This procedure may have to be repeated until all blades 50 are installed. So, the method carried out during the blade assembly mode and described in the following may be carried out two or more times, e.g. three time, in order to install all of the blades 50, e.g. the three blades 50, at the rotor hub 51.

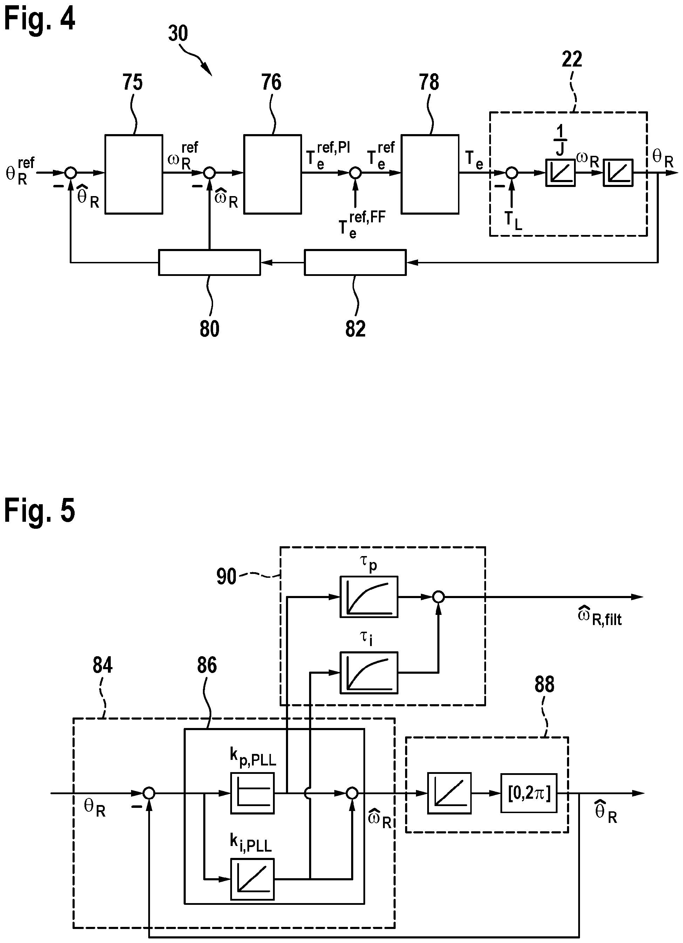

A method for bringing the rotor hub 51 of the wind turbine 20 in a predetermined position for arranging the (next) blade 50 of the wind turbine 20 at the rotor hub 51 comprises operating the rotating electrical machine 22 in the blade assembly mode in which the rotating electrical machine 22 is configured for rotating the rotor hub 51 such that the rotor hub 51 is brought in the predetermined position by the rotating electrical machine 22, wherein the predetermined position of the rotor hub 51 is given by a predetermined rotor mechanical angle reference $\theta_R^{ref}$ (see figures 3 and 4) of the rotor hub 51. The rotor mechanical angle reference $\theta_R^{ref}$ may vary from blade 50 to blade 50.

In particular, the blade assembly mode may comprise operating the rotating electrical machine 22 in the motor mode of the rotating electrical machine 22, wherein, in the motor mode, the rotating electrical machine 22 is configured for rotating the rotor hub 51 by electric energy from the electrical grid supplied to the rotating electrical machine 22 via the grid-side converters 28, 28, the DC-links 26, 46, and the machine-side converters 24, 48.

In more detail, in the motor mode, in particular in the blade assembly mode, the master controller 30 may be configured for modulating the grid-side converters 28, 48 to convert the AC input voltage supplied from the electrical grid into the corresponding DC-link voltage at the DC-link and for modulating the machine-side converters 24, 44 for converting the DC voltage supplied to the DC-link into the corresponding AC voltage for operating the rotating electrical machine 22. The master controller 30 may modulate the machine-side converters 24, 44 and the grid-side converters 28, 48 by one or more control signals generated by the master controller 30 and supplied to semiconductor switches 70, 72, 74 (see figure 2) of the machine-side converters 24, 44 and, respectively, the grid-side converters 28, 48 by the master controller 30. In this context, the rotating electrical machine 22 may be simply referred to as "motor". So, the blade assembly mode 22 may comprise or may be identical to the motor mode.

So, in the proposed blade assembly mode of operation, the flow of the power is reversed with respect to the normal mode of operation. In particular, the electrical grid supplies the electrical power which, via the proposed method, is used to operate the generator as a motor and to orientate the rotor hub 51 to the predetermined position for assembling one or more of the blades 50 to the rotor hub 51. In this context, the electrical grid optionally may be represented by an external generator, e.g. a diesel generator, that provides the required electrical power for the rotating electrical machine 22 during the blade assembly and/or motor mode. In this case, another transformer with a very small rated power may be used to connect the converter lines to the diesel generator.

**Fig. 2** shows an exemplary embodiment of one of the converters of the energy conversion system 18 of figure 1. The converter may comprise the first or second machine-side converter 24, 48 and/or, respectively, the first, second, third, and/or fourth capacitor 32, 34, 52, 54. The converter may further comprise amongst others a first switch 70, a second switch 72, and a third switch 74. The switches 70, 72, 74 may be individually switched by corresponding control signal of the master controller 30, e.g. to provide the modulation of the corresponding converter. The first switch 70 may be an ideal switch for the mathematical modelling of semiconductor switches of the converter in a first phase. The second switch 72 may be an ideal switch for the mathematical modelling of the semiconductor switches in a second phase. The third switch 74 may be an ideal switch for the mathematical modelling of the semiconductor switches in a third phase.

In the following the motor mode, in particular the blade assembly mode, is described in detail with the help of the block diagrams shown in figures 3 to 5, wherein steps of the method for bringing the rotor hub 51 in the predetermined position may correspond to the functions carried out by the individual blocks of the block diagrams. In other words, the following block diagrams may be representative for the steps carried out by carrying out the method for bringing the rotor hub 51 in the predetermined position.

**Fig. 3** shows an exemplary embodiment of a first control diagram of the wind turbine 20. The first control diagram may represent at least in part the master controller 30. As such, the master controller 30 may comprise a position controller 75, a speed controller 76, and a torque controller 78.

An actual angle signal which is representative for an actual rotor mechanical angle $\theta_R$ of the rotor hub 51 is received by the master controller 30. The actual rotor mechanical angle $\theta_R$ may be measured by a corresponding position sensor, e.g. an encoder, and may be sent from the corresponding position sensor to the master controller 30. The actual rotor mechanical angle $\theta_R$ is representative for an actual position of the rotor hub 51. Then, the rotating electrical machine 22 is operated in the blade assembly mode depending on the actual rotor mechanical angle $\theta_R$ of the rotor hub 51. The actual position of the rotor hub 51 may refer to an angular position of the rotor hub 51.

In particular, the rotating electrical machine 22 may be operated in the blade assembly mode depending on the actual rotor mechanical angle $\theta_R$ of the rotor hub 51 by determining an actual position error $\theta_R^{ref}-\theta_R$ between the predetermined rotor mechanical angle reference $\theta_R^{ref}$ and the actual rotor mechanical angle $\theta_R$ (see very left node in figure 3), by determining a rotor mechanical speed reference $\omega_R^{ref}$ depending on the actual position error $\theta_R^{ref}-\theta_R$, e.g. by a position controller 75, and by operating the rotating electrical machine 22 depending on the rotor mechanical speed reference $\omega_R^{ref}$.

Further, the rotating electrical machine 22 may be operated depending on the rotor mechanical speed reference $\omega_R^{ref}$ by receiving an actual speed signal which is representative for an actual rotor mechanical speed $\omega_R$ of the rotor hub 51, by determining an actual speed error $\omega_R^{ref} - \omega_R$ between the rotor mechanical speed reference $\omega_R^{ref}$ and the actual rotor mechanical speed $\omega_R$ (see node between the position controller 75 and a speed controller 76 of the master controller 30), and operating the rotating electrical machine 22 depending on the actual speed error $\omega_R^{ref} - \omega_R$. The actual rotor mechanical speed $\omega_R$ of the rotor hub 51 may be measured by an appropriate sensor, e.g. the above encoder or another sensor coupled to the rotor hub 51.

Furthermore, the rotating electrical machine 22 may be operated depending on the actual speed error $\omega_R^{ref} - \omega_R$ by determining a temporary torque reference $T_e^{ref,PI}$ depending on the actual speed error $\omega_R^{ref} - \omega_R$ and operating the rotating electrical machine 22 depending on the temporary torque reference $T_e^{ref,PI}$. The temporary torque reference $T_e^{ref,PI}$ may be determined by the speed controller 76. For example, the rotating electrical machine 22 may be operated depending on the temporary torque reference $T_e^{ref,PI}$ by estimating a blade torque of one or more of the blades 50 already arranged at the rotor hub 51, by adjusting the temporary torque reference $T_e^{ref,PI}$ by the blade torque, and operating the rotating electrical machine depending on a correspondingly adjusted torque reference $T_e^{ref}$. In this context, for the calculation of the adjusted torque reference $T_e^{ref}$, a blade torque feedforward term $T_e^{ref,FF}$ corresponding to the blade(s) torque may be added to an output of the speed controller 76 (see node between speed controller 76 and a torque controller 78 of the master controller 30). The blade torque feedforward term $T_e^{ref,FF}$ may correspond to an estimated blade torque generated by already mounted ones of the blades 50. The estimated blade torque may be a function of the actual angular position of the rotor hub 51 and may depend on the number of the blades 50 which are already mounted at the rotor hub 51. The blade torque feedforward term $T_e^{ref,FF}$ may be estimated by calculation or simulation or may be determined empirically.

The temporary torque reference $T_e^{ref,PI}$ may be adjusted by the blade torque feedforward term $T_e^{ref,FF}$ by adding the blade torque feedforward term $T_e^{ref,FF}$ to the temporary torque reference $T_e^{ref,PI}$, and the adjusted torque reference $T_e^{ref}$ may corresponds to the sum of the blade torque feedforward term $T_e^{ref,FF}$ and the temporary torque reference $T_e^{ref,PI}$. The adjusted torque reference $T_e^{ref}$ may be sent to the torque controller 78.

The controller 78 determines an electromagnetic torque $T_e$ depending on the adjusted torque reference $T_e^{ref}$. For example, if a current control is applied on the rotating electrical machine 22, then the adjusted torque reference $T_e^{ref}$, which may be referred to as electromagnetic torque reference, may be translated to a respective d-axis and q-axis current reference in a rotating d-q reference frame that is aligned to a permanent magnet flux, as e.g. described in the paper "Decoupled vector control scheme for dual three-phase permanent magnet synchronous machines" by J. Karttunen, S. Kallio, P. Peltoniemi, P. Silventoinen, O. Pyrhönen, IEEE Transactions on Industrial Electronics, vol. 61, no. 5, pp. 2185-2196, 2013. The d-q current references may be sent to a corresponding current controller which ensures that they are followed. By following the desired current references the required electromagnetic torque $T_e$ is generated by the torque controller 78. Another option may be to use a non-linear stator flux controller for the torque control, e.g. as described in EP 22 182 749.6 (see description of figures 3 to 5). Then, the adjusted torque reference $T_e^{ref}$ may be sent to a corresponding stator flux controller in a stationary reference frame. By tracking a certain flux trajectory the desired electromagnetic torque $T_e$ may generated by the torque controller 78.

A difference between the electromagnetic torque $T_e$ and a load torque, which is the sum of the blade torque, a wind gusts torque, friction torque etc., may cause a rotation of the wind turbine rotor. The wind turbine rotor speed is equal to the integral of the afore mentioned torque difference multiplied by a gain, where is the moment of inertia, according to Newton's second law for rotation, as implied by the symbols in the block representing the rotating electrical machine 22. The integral of the speed is the change of the rotor angle (position).

However, one critical aspect of the blade assembly mode may be the calculation of the actual rotor mechanical speed $\omega_R$ of the rotor hub 51 and thereby of the already installed blades 50. The embodiments described in the following with respect to figures 4 and 5 may appropriately handle this issue.

**Fig. 4** shows an exemplary embodiment of a second control diagram of the wind turbine 20. The second control diagram may widely correspond to the first circuit diagram. Therefore, to provide a concise description of the present invention, only those features of the second control diagram are explained in the following, in which the second control diagram differs from the first control diagram.

The actual rotor mechanical angle $\theta_R$ may be measured by a position sensor 82 of the wind turbine 20. The position sensor 82 may be a part of the energy conversion system 18 and/or of the master controller 30.

The actual rotor mechanical angle $\theta_R$ may be sent from the position sensor 82 to an estimation block 80. The estimation block 80 may be configured for determining an estimated rotor mechanical angle $\hat{\theta}_R$ depending on the measured actual rotor mechanical angle $\theta_R$. The estimation block 80 is further explained in more detail below with respect to figure 5. An estimated position error $\theta_R^{ref} - \hat{\theta}_R$ between the predetermined position, i.e. the rotor mechanical angle reference $\theta_R^{ref}$ and the estimated rotor mechanical angle $\theta_R$ may be determined (see very left node in figure 4). Then, a rotor mechanical speed reference $\omega_R^{ref}$ may be determined depending on the estimated position error $\theta_R^{ref} - \hat{\theta}_R$, e.g. by the position controller 75. Then, the rotating electrical machine 22 may be operated depending on the rotor mechanical speed reference $\omega_R^{ref}$.

Further, the rotating electrical machine 22 may be operated depending on the rotor mechanical speed reference $\theta_R^{ref}$ by determining an estimated rotor mechanical speed $\hat{\omega}_R$ depending on the actual rotor mechanical angle $\theta_R$ and the estimated rotor mechanical angle $\hat{\theta}_R$, by determining an estimated speed error $\omega_R^{ref} - \hat{\omega}_R$ between the rotor mechanical speed reference $\omega_R^{ref}$ and the estimated rotor mechanical

speed $\hat{\omega}_R$ (see node between position controller 75 and speed controller 76 of figure 4), and by operating the rotating electrical machine 22 depending on the estimated speed error $\omega_R^{ref} - \hat{\omega}_R$.

Furthermore, the rotating electrical machine 22 may be operated depending on the estimated speed error $\omega_R^{ref} - \hat{\omega}_R$ by determining the temporary torque reference $T_e^{ref,PI}$ depending on the estimated speed error $\omega_R^{ref} - \hat{\omega}_R$, and operating the rotating electrical machine depending on the temporary torque reference $T_e^{ref,PI}$. For example, the rotating electrical machine 22 may be operated depending on the temporary torque reference $T_e^{ref,PI}$ by estimating the blade torque feedforward term $T_e^{ref,FF}$ of one or more of the blades 50 already arranged at the rotor hub 51, by adjusting the temporary torque reference $T_e^{ref,PI}$ by the blade torque feedforward term $T_e^{ref,FF}$ (see node between the speed controller 76 and the torque controller 78 of figure 4), and by operating the rotating electrical machine 22 depending on the correspondingly adjusted torque reference $T_e^{ref}$. In particular, the temporary torque reference $T_e^{ref,PI}$ may be adjusted by the blade torque feedforward term $T_e^{ref,FF}$ by adding the blade torque feedforward term $T_e^{ref,FF}$ to the temporary torque reference $T_e^{ref,PI}$, and the adjusted torque reference $T_e^{ref}$ corresponds to the sum of the blade torque feedforward term $T_e^{ref,FF}$ and the temporary torque reference $T_e^{ref,PI}$.

**Fig. 5** shows an exemplary embodiment of a third control diagram of the wind turbine 20. The third control diagram may correspond to the estimation block 80 shown in figure 4. From figure 5 it may be seen that the estimated rotor mechanical angle $\hat{\theta}_R$ may be determined depending on the actual rotor mechanical angle $\theta_R$ by a PLL, wherein the PLL may comprise an angular speed calculation block 84, a PI controller 86, and an angle calculation block 88. In particular, the estimated rotor mechanical speed $\hat{\omega}_R$ may be determined depending on the actual rotor mechanical angle $\theta_R$ and the estimated rotor mechanical angle $\hat{\theta}_R$ by the PI controller 86 and the angle calculation block 88.

Optionally, the estimated rotor mechanical speed $\hat{\omega}_R$ may be filtered by a low pass filter 90. In this case, the estimated speed error $\omega_R^{ref} - \hat{\omega}_R$ may be determined as the difference between the rotor mechanical speed reference $\omega_R^{ref}$ and the correspondingly filtered estimated rotor mechanical speed $\hat{\omega}_{R,filt}$. The filtered estimated rotor mechanical speed $\hat{\omega}_{R,filt}$ may be sent to the speed controller 76. Optionally, to have more degrees of freedom in a fine-tuning of the speed control by the speed controller 76, different time constants $\tau_p$ and $\tau_i$ may be used for the lowpass filtering of the parts calculated by a corresponding proportional and integral controller respectively (see low-pass filter 90), wherein they optionally may be set to the same value.

Optionally, the estimated rotor mechanical angle $\hat{\theta}_R$ may be determined depending on the estimated rotor mechanical speed $\hat{\omega}_{R,filt}$. For example, the estimated rotor mechanical angle $\hat{\theta}_R$ may be determined depending on the estimated rotor mechanical speed $\hat{\omega}_{R,filt}$ by integrating the estimated rotor mechanical speed $\hat{\omega}_{R,filt}$. This integration may be carried out at a very high sampling rate, e.g. in a range of 0.1 MHz to 10 MHz, e.g. 0.5 MHz to 5 MHz, e.g. about 1 MHz. The PI controller 86 for determining the estimated rotor mechanical speed $\hat{\omega}_{R,filt}$ may be implemented at a much lower sampling rate, e.g. in the range of some kHz, in particular without compromising the dynamic performance of the blade assembly mode.

**Fig. 6** shows an example of the blade 50 of the wind turbine 20 at the rotor hub 51 of the wind turbine 20 in two different positions. In particular, in a first position of the blade 50, the blade 50 extends basically horizontally, wherein the blade 50 in the first position is indicated in figure 6 by the solid line. In contrast, in a second position of the blade 50, the blade 50 extends basically vertically, wherein the blade 50 in the second state is indicated in figure 6 by the dashed line. The tower 16 of the wind turbine 20 comprising the rotor hub 51 may be already installed at the final location of the wind turbine 20. Then, the rotor hub 51 may be positioned such that the blade 50 may be installed, e.g. by the method explained above, wherein normally the blade 50 is mounted to the rotor hub 51 in the first position, i.e. when the blade 50 is oriented horizontally. Then, the next blade 50 has to be mounted to the rotor hub 51 and the rotor hub 51 has to be rotated such that the next blade 50 can be mounted when it is in the first position.

However, a weight of the already installed blade 50 generates a torque on the rotor hub 51, which causes the blade 50 to move down, and may cause an unintended and/or uncontrolled rotation of the rotor hub 51 and thereby an unintended and/or uncontrolled trip of the blade 50, when the rotor hub 51 is not locked mechanically at a certain angular position. In this scenario, a worst case of a corresponding blade fall may be that only one of the blades 50 is mounted on the rotor hub 51 and the fall starts at exact the position where the blade 50 has been mounted, e.g. when the blade 50 is oriented horizontally and/or in the first state. A correspondingly uncontrolled fall of the blade 50 may represent a danger for service or maintenance personal mounting the blades 50 to the rotor hub 51. In addition, the uncontrolled fall of the blade 50 may have as consequence uncontrolled oscillations around the equilibrium exposing to danger the personal and the equipment.

A solution to this issue may be to create a short circuit in the dc-link 26, 46 of the first and/or second converter by activating all of the semiconductor switches 70 of the corresponding 3LNPC converter on the generator side, as explained with respect to figure 7. In particular, after an initial transient of the short circuit, a non-oscillating electromagnetic torque is generated which counteracts the torque caused by the blade 50. The result is a smooth movement of the blade 50 to a vertical position of the blade 50, in particular such that the blade 50 is orientated vertically and/or in the second state.

**Fig. 7** shows a flowchart of an exemplary embodiment of a method for avoiding the unintended fall of the blade 50 of the wind turbine 20 of figure 6. The method enables to avoid an unintended fall of the blade 50 of the wind turbine 20 when the blade 50 or another blade 50 of the wind turbine 20 is arranged at the rotor hub 51 of the wind turbine 20.

In a step S2, a prevent unintended fall mode may be entered, when it is planned to mechanically unlock the rotor hub 51 outside of the normal operation of the wind turbine. For example, the prevent unintended fall mode may be entered, when one or more of the blades 50 are mounted to the rotor hub 51, when one or more of the blades 50 are removed from the rotor hub 51, and/or when carrying out one or more maintenance tasks at the wind turbine 20, in particular at one or more of the blades 50 or the rotor hub 51. Optionally, the prevent unintended fall mode may be triggered, e.g. automatically, when entering the blade assembly mode, explained above.

In a step S4, a short circuit is generated at the DC-link 26, 46 by activating all of the semiconductor switches 70, 72, 74 of the machine-side converter 24, 44 at the same time. This causes a three-phase short circuit at machine-side terminals of the machine-side converter 24, 44 and a corresponding generator short circuit torque. This generator short circuit torque prevents an uncontrolled fall and afterwards an unintended fall of an already installed one of the blades 50. A corresponding short circuit steady state current may be in the range of a rated current, e.g. due to a high generator impedance of approximately 1 pu).

The functions of the circuit diagrams explained with respect to figures 3 to 5 and/or the method explained with respect to figures 6 and 7 may be embodied as hardware comprising several electronic components and/or dedicated micro-chips, e.g. FPGAs, as software, e.g. in the form of one or more computer programs, or as a combination of hardware and software. For example, a computer program for the above energy conversion system 18, in particular for the above master controller 30, may be provided, wherein the computer program, when being executed by the processor of the master controller 30, may be adapted for performing the functions of one or more of the above circuit diagrams and/or of the above method. Further, a computer-readable medium may be provided, in which the above computer program is stored. The computer-readable medium may be a floppy disk, a hard disk, an USB storage device, a RAM, a ROM, an EPROM or a FLASH memory. The computer readable medium may also be a data communication network, e.g. the Internet, which allows downloading a program code. In general, the computer-readable medium may be a non-transitory or transitory medium.

While the invention has been illustrated and described in detail in the drawings and foregoing description, such illustration and description are to be considered illustrative or exemplary and not restrictive; the invention is not limited to the disclosed embodiments. Other variations to the disclosed embodiments can be understood and effected by those skilled in the art and practising the claimed invention, from a study of the drawings, the disclosure, and the appended claims. For example, the rotating electrical machine 22 may output only two currents for one converter and, in case of two converters, two for the first converter and two for the second converter, wherein every converter may comprise a machine-side converter and a grid-side converter.

In the claims, the word "comprising" does not exclude other elements or steps, and the indefinite article "a" or "an" does not exclude a plurality. A single processor or controller or other unit may fulfil the functions of several items recited in the claims. The mere fact that certain measures are recited in mutually different dependent claims does not indicate that a combination of these measures cannot be used to advantage. Any reference signs in the claims should not be construed as limiting the scope.

LIST OF REFERENCE SYMBOLS

16    tower
18    energy conversion system
20    wind turbine
22    rotating electrical machine
24    first machine-side converter
26    first DC-link
28    first grid-side converter
30    master controller
32    first capacitor
34    second capacitor
40    transformer

44    second machine-side converter
46    second DC-link
48    second grid-side converter
50    blade
51    rotor hub
52    third capacitor
54    fourth capacitor
60    first transformer secondary winding inductances
62    second transformer secondary winding inductances
64    transformer primary winding inductances
66    grid inductances
68    grid source
70    first switch
72    second switch
74    third switch
75    position controller
76    speed controller
78    torque controller
80    estimation block
82    position sensor
84    angular speed calculation block
86    PI controller
88    angle calculation block
90    low-pass filters
$\theta_R$    actual rotor mechanical angle
$\theta_R^{ref} - \theta_R$    actual position error
$\theta_R^{ref}$    rotor mechanical angle reference
$\omega_R^{ref}$    rotor mechanical speed reference
$\omega_R$    actual rotor mechanical speed
$\omega_R^{ref} - \omega_R$    actual speed error
$\hat{\theta}_R$    estimated rotor mechanical angle
$\theta_R^{ref} - \hat{\theta}_R$    estimated position error
$\hat{\omega}_R$    estimated rotor mechanical speed
$\omega_R^{ref} - \hat{\omega}_R$    estimated speed error
$T_e^{ref,PI}$    temporary torque reference
$T_e^{ref,FF}$    blade torque feedforward term
$T_e^{ref}$    adjusted torque reference
$\hat{\omega}_{R,filt}$    filtered estimated rotor mechanical speed
$T_e$    electromagnetic torque

**Claims**

1. A method for bringing a rotor hub (51) of a wind turbine (20) in a predetermined position for arranging a blade (50) of the wind turbine (20) at the rotor hub (51), the wind turbine (20) comprising the rotor hub (51), a rotating electrical machine (22) mechanically coupled to the rotor hub (51), a machine-side converter (24, 44) electrically coupled to the rotating electrical machine (22), a DC-link (26, 46) electrically coupled to the machine-side converter (24), and a grid-side converter (28, 48) electrically coupled to the DC-link (26, 46) and to an electrical grid, the method comprising:

operating the rotating electrical machine (22) in a blade assembly mode in which the rotating electrical machine (22) is configured for rotating the rotor hub (51) such that the rotor hub (51) is brought in the predetermined position by the rotating electrical machine (22), wherein the predetermined position of the rotor hub (51) is given by a predetermined rotor mechanical angle reference ( $\theta_R^{ref}$ ) of the rotor hub (51).

2. Method in accordance with claim 1, the blade assembly mode comprising:

operating the rotating electrical machine (22) in a motor mode of the rotating electrical machine (22), wherein, in the motor mode, the rotating electrical machine (22) is configured for rotating the rotor hub (51) by electric energy from the electrical grid supplied to the rotating electrical machine (22) via the grid-side converter (28, 48), the DC-link (26, 46), and the machine side converter (24, 44).

3. Method in accordance with one of the preceding claims, comprising:

receiving an actual angle signal which is representative for an actual rotor mechanical angle ($\theta_R$) of the rotor hub (51), wherein the actual rotor mechanical angle ($\theta_R$) is representative for an actual position of the rotor hub (51); and operating the rotating electrical machine (22) in the blade assembly mode depending on the actual rotor mechanical angle ($\theta_R$) of the rotor hub (51).

4. Method in accordance with claim 3, wherein the rotating electrical machine (22) is operated in the blade assembly mode depending on the actual rotor mechanical angle ($\theta_R$) of the rotor hub (51) by

determining an actual position error ( $\theta_R^{ref} - \theta_R$ ) between the predetermined rotor mechanical angle reference ( $\theta_R^{ref}$ ) and the actual rotor mechanical angle ($\theta_R$), determining a rotor mechanical speed reference ( $\omega_R^{ref}$ ) depending on the actual position error

( $\theta_R^{ref} - \theta_R$ ), and operating the rotating electrical machine (22) depending on the rotor mechanical speed reference ( $\omega_R^{ref}$ ).

5. Method in accordance with claim 4, wherein the rotating electrical machine (22) may be operated depending on the rotor mechanical speed reference ( $\omega_R^{ref}$ ) by

receiving an actual speed signal which is representative for an actual rotor mechanical speed ($\omega_R$) of the rotor hub (51), determining an actual speed error ( $\omega_R^{ref} - \omega_R$ ) between the rotor mechanical speed reference ( $\omega_R^{ref}$ ) and the actual rotor mechanical speed ($\omega_R$), and operating the rotating electrical machine (22) depending on the actual speed error ( $\omega_R^{ref} - \omega_R$ ).

6. Method in accordance with claim 3, wherein the rotating electrical machine (22) is operated in the blade assembly mode depending on the actual rotor mechanical angle ($\theta_R$) of the rotor hub (51) by

determining an estimated rotor mechanical angle ($\hat{\theta}_R$) depending on the actual rotor mechanical angle ($\theta_R$); determining an estimated position error ( $\theta_R^{ref} - \hat{\theta}_R$ ) between the predetermined position ( $\theta_R^{ref}$ ) and the estimated rotor mechanical angle ($\hat{\theta}_R$), determining a rotor mechanical speed reference ( $\omega_R^{ref}$ ) depending on the estimated position error ( $\theta_R^{ref} - \hat{\theta}_R$ ), and operating the rotating electrical machine (22) depending on the rotor mechanical speed reference ( $\omega_R^{ref}$ ).

7. Method in accordance with claim 6, wherein the rotating electrical machine (22) may be operated depending on the rotor mechanical speed reference ( $\omega_R^{ref}$ ) by

determining an estimated rotor mechanical speed ($\hat{\omega}_R$) depending on the actual rotor mechanical angle ($\theta_R$) and the estimated rotor mechanical angle ($\hat{\theta}_R$),

determining an estimated speed error ( $\omega_R^{ref} - \widehat{\omega}_R$ ) between the rotor mechanical speed reference ( $\omega_R^{ref}$ ) and the estimated rotor mechanical speed ($\hat{\omega}_R$), and

operating the rotating electrical machine (22) depending on the estimated speed error ( $\omega_R^{ref} - \widehat{\omega}_R$ ).

8. Method in accordance with claim 7, wherein the estimated rotor mechanical angle ($\theta_R$) is determined depending on the estimated rotor mechanical speed ($\hat{\omega}_R$).

9. Method in accordance with one of claims 5, 7, or 8, wherein the rotating electrical machine (22) is operated depending on the actual speed error ( $\omega_R^{ref} - \omega_R$ ) or the estimated speed error ( $\omega_R^{ref} - \widehat{\omega}_R$ ) by

determining a temporary torque reference ( $T_e^{ref,PI}$ ) depending on the actual speed error ( $\omega_R^{ref} - \omega_R$ ) or, respectively, the estimated speed error ( $\omega_R^{ref} - \widehat{\omega}_R$ ), and

operating the rotating electrical machine (22) depending on the temporary torque reference ( $T_e^{ref,PI}$ ).

10. Method in accordance with claim 9, wherein the rotating electrical machine (22) is operated depending on the temporary torque reference ( $T_e^{ref,PI}$ ) by

estimating a blade torque feedforward term ( $T_e^{ref,FF}$ ) of one or more blades already arranged at the rotor hub (51),

adjusting the temporary torque reference ( $T_e^{ref,PI}$ ) by the blade torque feedforward term ( $T_e^{ref,FF}$ ), and

operating the rotating electrical machine (22) depending on a correspondingly adjusted torque reference ( $T_e^{ref}$ ).

11. Method in accordance with claim 10, wherein

the temporary torque reference ( $T_e^{ref,PI}$ ) is adjusted by the blade torque feedforward term ( $T_e^{ref,FF}$ ) by adding the blade torque feedforward term ( $T_e^{ref,FF}$ ) to the temporary torque reference ( $T_e^{ref,PI}$ ), and

the adjusted torque reference ( $T_e^{ref}$ ) corresponds to the sum of the blade torque feedforward term ( $T_e^{ref,FF}$ ) and the temporary torque reference ( $T_e^{ref,PI}$ ).

12. Method in accordance with one of the preceding claims, wherein

the machine-side converter (24, 44) comprises several semiconductor switches (70, 72, 74), a short circuit is generated at the DC-link (26, 46) by activating all of the semiconductor switches (70, 72, 74) at the same time.

13. A master controller (30) for an energy conversion system (18) for a wind turbine (20) adapted/configured for performing the method of one of claims 1 to 12.

14. An energy conversion system (18) of a wind turbine (20), comprising:

a rotating electrical machine (22),
at least one machine-side converter (24, 44) coupled to the rotating electrical machine (22),
at least one DC-link (26, 46) coupled to the machine-side converter (24, 44);
at least one grid-side converter (28, 48), which is configured for coupling the DC-link (26, 46) to an electrical grid, and
a master controller (30) in accordance with claim 13.

15. A computer program for driving an energy conversion system (18) of a wind turbine (20) in accordance with claim 13, which, when being executed by a processor of a master controller (30) of the wind turbine (30) in accordance with claim 13, is adapted for performing the method of one of claims 1 to 12.

**16.** A computer-readable medium in which a computer program according to claim 15 is stored.

**17.** A method for avoiding an unintended fall of a blade (50) of a wind turbine (20) when the blade (50) or another blade (50) of the wind turbine (20) is arranged at a rotor hub (51) of the wind turbine (20), the wind turbine (20) comprising the rotor hub (51), a rotating electrical machine (22) mechanically coupled to the rotor hub (51), a machine-side converter (24, 44) electrically coupled to the rotating electrical machine (22) and comprising several semiconductor switches (70, 72, 74), a DC-link (26, 46) electrically coupled to the machine-side converter (24, 44), and a grid-side converter (28, 48) electrically coupled to the DC-link (26, 46) and to an electrical grid, the method comprising:
generating a short circuit at the DC-link (26, 46) by activating all of the semiconductor switches (70, 72, 74) at the same time.

**Fig. 1**

## Fig. 2

## Fig. 3

## Fig. 4

## Fig. 5

## Fig. 6

## Fig. 7

## EUROPEAN SEARCH REPORT

**Application Number**

**EP 23 21 3533**

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2009/162202 A1 (NIES JACOB JOHANNES [NL] ET AL) 25 June 2009 (2009-06-25) * paragraphs [0008], [0032], [0033]; figures 1-5 * | 1-11, 13-16 | INV. F03D7/02 F03D13/10 |
| X | US 2013/328309 A1 (FUJII JUNJI [JP] ET AL) 12 December 2013 (2013-12-12) * paragraphs [0026], [0031], [0040], [0044] * | 1-11, 13-16 | |
| X | US 2016/195069 A1 (PLANO MORILLO EUGENIO [ES] ET AL) 7 July 2016 (2016-07-07) * paragraphs [0010], [0017]; claim 1 * | 1-11, 13-16 | |
| X | EP 2 574 774 A1 (SIEMENS AG [DE]) 3 April 2013 (2013-04-03) * paragraphs [0013], [0034], [0035]; figures 1,2 * | 1-11, 13-16 | |
| A | WO 2023/186231 A1 (VESTAS WIND SYS AS [DK]) 5 October 2023 (2023-10-05) * the whole document * | 1-17 | TECHNICAL FIELDS SEARCHED (IPC) F03D |

The present search report has been drawn up for all claims

| Place of search | Date of completion of the search | Examiner |
|---|---|---|
| The Hague | 25 April 2024 | Biloen, David |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 21 3533

This annex lists the patent family members relating to the patent documents cited in the above-mentioned European search report.
The members are as contained in the European Patent Office EDP file on
The European Patent Office is in no way liable for these particulars which are merely given for the purpose of information.

25-04-2024

| Patent document cited in search report | | | Publication date | Patent family member(s) | | | Publication date |
|---|---|---|---|---|---|---|---|
| US 2009162202 | A1 | | 25-06-2009 | CN | 101463798 | A | 24-06-2009 |
| | | | | EP | 2072814 | A2 | 24-06-2009 |
| | | | | US | 2009162202 | A1 | 25-06-2009 |
| US 2013328309 | A1 | | 12-12-2013 | CN | 103370534 | A | 23-10-2013 |
| | | | | CN | 203670098 | U | 25-06-2014 |
| | | | | EP | 2677168 | A1 | 25-12-2013 |
| | | | | KR | 20130109236 | A | 07-10-2013 |
| | | | | TW | 201308860 | A | 16-02-2013 |
| | | | | US | 2013328309 | A1 | 12-12-2013 |
| | | | | WO | 2012111115 | A1 | 23-08-2012 |
| | | | | WO | 2012111416 | A1 | 23-08-2012 |
| US 2016195069 | A1 | | 07-07-2016 | BR | 102015032479 | A2 | 21-03-2017 |
| | | | | CN | 105736241 | A | 06-07-2016 |
| | | | | EP | 3037658 | A1 | 29-06-2016 |
| | | | | ES | 2575101 | A1 | 24-06-2016 |
| | | | | US | 2016195069 | A1 | 07-07-2016 |
| EP 2574774 | A1 | | 03-04-2013 | CA | 2790855 | A1 | 27-03-2013 |
| | | | | CN | 103016257 | A | 03-04-2013 |
| | | | | DK | 2574774 | T3 | 08-09-2014 |
| | | | | EP | 2574774 | A1 | 03-04-2013 |
| | | | | US | 2013243595 | A1 | 19-09-2013 |
| WO 2023186231 | A1 | | 05-10-2023 | NONE | | | |

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 22182749 A

**Non-patent literature cited in the description**

- **J. KARTTUNEN** ; **S. KALLIO** ; **P. PELTONIEMI** ; **P. SILVENTOINEN** ; **O. PYRHÖNEN**. Decoupled vector control scheme for dual three-phase permanent magnet synchronous machines. *IEEE Transactions on Industrial Electronics*, 2013, vol. 61 (5), 2185-2196